# DEMANDE DE BREVET EUROPEEN

(11) **EP 1 369 638 A2**
(43) Date de publication de la demande: **10.12.2003**
(21) Numéro de dépôt: 03101578.7
(22) Date de dépôt: 30.05.2003
(51) Int. Cl.: F17C 1/16, F17C 1/14

(54) **Réservoir pour fluide sous pression comprenant deux compartiments et procéde de fabrication d'un tel réservoir**

(30) Priorité: 03.06.2002 FR 0206779
(71) Demandeur: EADS Launch Vehicles, 75781 Paris Cedex 16 (FR)
(72) Inventeur: CALABRO, Max, 78670, VILLENNES (FR)
(74) Mandataire: Poulin, Gérard

(57) **Abrégé**

L'invention se rapporte à un procédé de fabrication d'un réservoir (1) pour fluides sous pression comprenant deux compartiments (8,10). Selon l'invention, le procédé comprend les étapes suivantes :
- montage d'un mandrin de bobinage ;
- mise en place d'une paroi métallique (4) sur le mandrin, la paroi (4) se présentant sous forme repliée ;
- réalisation par bobinage de la paroi extérieure (2) par bobinage autour d'un ensemble comprenant le mandrin et la paroi repliée (4) ;
- polymérisation de la paroi (2) et démontage du mandrin ;
- déploiement de la paroi métallique (2), de façon à obtenir un premier compartiment (8) à l'intérieur de la paroi métallique (4), ainsi qu'un second compartiment (10) entre les deux parois (2,4).

L'invention s'applique également à un réservoir (1) tel que celui obtenu par le procédé décrit ci-dessus.

Application au domaine des lanceurs et des fusées.

## Description

### DOMAINE TECHNIQUE

La présente invention se rapporte à un réservoir pour fluides sous pression comprenant deux compartiments, ainsi qu'à un procédé de fabrication d'un tel réservoir.

Plus spécifiquement, l'invention a trait au domaine des réservoirs dont les deux compartiments constitutifs sont destinés à contenir des fluides sous une pression pouvant atteindre quelques bars, par exemple 20 bars ou plus, ce type de réservoir étant notamment utilisé pour stocker des ergols stockables et/ou cryogéniques.

L'invention trouve tout particulièrement une application dans le domaine des lanceurs et des fusées.

### ETAT DE LA TECHNIQUE ANTERIEURE

Les réservoirs d'ergols pour lanceurs ont déjà fait l'objet de plusieurs réalisations dans l'art antérieur.

En effet, on connaît les réservoirs classiques d'ergols cryogéniques constitués d'une paroi extérieure métallique définissant un espace sensiblement sphérique, à l'intérieur duquel de l'oxygène liquide ou de l'hydrogène liquide peuvent être introduits, sous une pression ne dépassant pas quelques bars.

Pour réaliser ce type de réservoir à ergols cryogéniques, on procède habituellement à l'assemblage, par exemple par soudage, de plusieurs secteurs métalliques les uns sur les autres, afin d'obtenir une paroi extérieure du réservoir de forme sensiblement sphérique.

De l'art antérieur, on connaît également les réservoirs à ergols stockables, tels que la monométhylhydrazine ou le péroxyde d'azote. Contrairement aux réservoirs à ergols cryogéniques dans lesquels la pression des liquides est faible en raison de la présence de turbopompes prévues à l'étage concerné du lanceur, les réservoirs à ergols stockables destinés à fonctionner sans turbopompes ont été conçus de manière à pouvoir supporter des pressions très supérieures, pouvant atteindre 20 bars ou plus.

Pour répondre aux contraintes techniques telles que la forte pression à supporter et une masse maximale à ne pas dépasser pour ne pas trop alourdir la masse globale du lanceur, des réservoirs à paroi extérieure bobinée en matériau composite ont été développés. Il a en effet été constaté que l'emploi d'une telle technique permettait de réaliser des réservoirs relativement légers et très résistants aux fortes pressions, ces caractéristiques techniques avantageuses étant tout à fait conformes à celles recherchées.

Pour fabriquer ce type de réservoir bobiné, on réalise généralement un bobinage à l'aide de fils imprégnés autour d'un mandrin de bobinage, celui-ci présentant une forme sensiblement sphérique ou elliptique et complémentaire de celle de la paroi extérieure du réservoir que l'on souhaite effectuer. Une fois cette opération achevée, la paroi extérieure du réservoir est durcie par polymérisation, puis le mandrin de bobinage est démonté et extrait de l'espace intérieur sphérique formé par la paroi en matériau composite obtenue.

Par ailleurs, d'autres réalisations du type réservoir bi-compartiments ont également été proposées dans l'art antérieur.

De manière générale, ce type de réservoir comprend une paroi extérieure définissant un espace séparé en deux compartiments, à l'intérieur desquels peuvent être respectivement stockés un combustible et un comburant, tels que l'hydrogène liquide et l'oxygène liquide.

Dans ce type de réalisation, le principal avantage réside dans la réduction de l'encombrement des éléments permettant de stocker les ergols destinés à alimenter la chambre de combustion d'un étage du lanceur, notamment par rapport aux solutions classiques de l'art antérieur, dans lesquelles les deux ergols étaient placés dans deux réservoirs distincts situés à distance l'un de l'autre. Par ailleurs, les réservoirs bi-compartiments disposent habituellement d'une cloison commune, dimensionnée uniquement pour supporter la différence de pression entre les deux compartiments du réservoir. Ainsi, la cloison prévue entre les deux compartiments n'est soumise qu'à une pression généralement inférieure au bar, et peut donc prendre la forme d'une simple tôle métallique de 1 ou 2 millimètres d'épaisseur, lorsque la différence de température entre les ergols ne nécessite pas qu'une couche isolante soit interposée entre les deux compartiments.

Un autre type de réservoir bi-compartiments est décrit dans le document US-A-5 085 343. Le réservoir présenté comporte en effet deux compartiments métalliques fermés et assemblés par vissage l'un sur l'autre, ces deux compartiments étant notamment séparés par une protection thermique en raison de la différence de température entre l'oxygène liquide et l'hydrogène liquide, stockés respectivement dans l'un et l'autre des deux compartiments.

Cependant, dans l'ensemble des réservoirs bi-compartiments de l'art antérieur qui viennent d'être décrits, seules des réalisations mettant en oeuvre des compartiments métalliques ont été proposées. Ceci limite ainsi le domaine d'utilisation de ces réservoirs à celui des ergols cryogéniques, sans s'étendre à celui des ergols stockables pourtant largement utilisés dans les lanceurs actuels, et nécessitant d'être maintenus sous des pressions plus importantes. Or la conception des assemblages métalliques proposés est largement incompatible avec l'utilisation de la technique de bobinage de fils imprégnés autour d'un mandrin de bobinage, qui n'est actuellement mise en oeuvre que dans la fabrication de réservoirs à compartiment unique. L'art antérieur n'est par conséquent pas en mesure de fournir de réservoirs en matériau composite comportant deux compartiments à l'intérieur desquels peuvent être stockés des ergols sous pression, celle-ci pouvant par exemple être de l'ordre de 20 bars ou plus.

### EXPOSÉ DE L'INVENTION

L'invention a donc pour but de proposer un réservoir pour fluides sous pression comprenant deux compartiments ainsi que son procédé de fabrication, le réservoir remédiant au moins partiellement aux inconvénients mentionnés ci-dessus relatifs aux réalisations de l'art antérieur.

Plus précisément, l'invention a pour but de présenter un réservoir comprenant deux compartiments à l'intérieur desquels peuvent être stockés des fluides sous une pression pouvant atteindre plusieurs bars, tels que des ergols stockables aptes à alimenter la chambre de combustion d'un étage de lanceur.

Pour ce faire, l'invention a tout d'abord pour objet un procédé de fabrication d'un réservoir pour fluides sous pression comprenant deux compartiments. Selon l'invention, le procédé de fabrication comprend les étapes suivantes :
- montage d'un mandrin de forme sensiblement complémentaire de celle d'une paroi extérieure du réservoir ;
- mise en place d'une paroi métallique sur le mandrin, la paroi métallique se présentant sous forme repliée et étant mise en place de façon à épouser une partie du mandrin ;
- réalisation de la paroi extérieure du réservoir en matériau composite, autour d'un ensemble comprenant le mandrin et la paroi métallique repliée ;
- polymérisation de la paroi extérieure en matériau composite du réservoir ;
- démontage du mandrin ;
- déploiement de la paroi métallique à l'intérieur de la paroi extérieure du réservoir, de façon à obtenir un premier compartiment à l'intérieur de la paroi métallique, ainsi qu'un second compartiment entre la paroi extérieure du réservoir en matériau composite et la paroi métallique.

Avantageusement, le procédé selon l'invention permet d'obtenir un réservoir à deux compartiments pouvant chacun contenir des fluides sous fortes pressions, tels que des ergols stockables destinés à alimenter la chambre de combustion d'un étage de lanceur.

En effet, le second compartiment du réservoir est partiellement délimité par une paroi extérieure en matériau composite, dont la technique de réalisation à l'aide d'un mandrin est tout à fait appropriée pour réaliser une paroi à forte résistance mécanique. Par ailleurs, cette technique également utilisée pour la fabrication de réservoir en matériau composite à compartiment unique est parfaitement maîtrisée, et très facile à mettre en oeuvre. A titre d'exemples indicatifs, le mandrin peut être conçu pour autoriser la réalisation de la paroi extérieure en matériau composite par bobinage, bobinage par contact, drapage, ou encore toute autre méthode conduisant à la formation d'une paroi en matériau composite.

D'autre part, le premier compartiment est défini à l'intérieur d'une simple paroi métallique participant également en partie à la délimitation du second compartiment du réservoir, cette paroi métallique étant située à l'intérieur de la paroi extérieure en matériau composite. De cette manière, le fluide présent dans ce premier compartiment peut également être maintenu sous forte pression, dans la mesure où la paroi métallique doit uniquement supporter la différence de pression entre les deux compartiments, cette différence de pression n'étant généralement pas supérieure à 1 bar. De plus, il est à noter qu'en mettant en oeuvre un tel procédé selon l'invention, la paroi métallique et la paroi extérieure en matériau composite peuvent comprendre des portions en contact, notamment lorsque l'opération de polymérisation de la paroi extérieure en matériau composite entraîne un collage d'une portion de la paroi métallique sur cette paroi extérieure du réservoir. Dans un tel cas, au niveau des zones de contact entre les deux parois, la pression exercée par le fluide contenu dans le premier compartiment est reprise mécaniquement par l'ensemble formé de la paroi métallique et de la paroi en matériau composite, ce qui autorise naturellement le stockage sous haute pression du fluide concerné.

Selon un mode de réalisation préféré de la présente invention, la mise en place d'une protection thermique s'effectue en introduisant la protection à l'intérieur du second compartiment, par au moins un premier trou d'homme traversant la paroi extérieure en matériau composite. Pour effectuer le collage de la protection thermique sur la portion de la paroi métallique séparant le premier et le second compartiments du réservoir, on peut alors prévoir la présence de moyens d'appui à l'intérieur du premier compartiment du réservoir. Les moyens d'appui sont préférentiellement introduits à l'intérieur du premier compartiment en traversant la paroi extérieure en matériau composite et la paroi métallique par au moins un second trou d'homme, pratiqué sur des portions en contact de la paroi extérieure en matériau composite et de la paroi métallique.

Selon un autre mode de réalisation préféré de la présente invention, après l'étape de mise en place de la paroi métallique sur le mandrin et avant la réalisation de la paroi extérieure du réservoir en matériau composite, on colle une protection thermique sur une portion de la paroi métallique n'étant pas en contact avec le mandrin, puis on procède à l'application d'une couche de démoulant sur la protection thermique. Ainsi, après l'étape de déploiement de la paroi métallique, l'ensemble formé par la paroi métallique déployée revêtue partiellement de la protection thermique est décroché de la paroi en matériau composite, puis retourné et recollé sur cette paroi extérieure du réservoir en matériau composite, de façon à ce que la protection thermique se situe sur une portion de la paroi métallique séparant le premier et le second compartiments du réservoir.

Préférentiellement, l'opération de retournement et de recollage de l'ensemble formé par la paroi métallique déployée revêtue partiellement de la protection thermique s'effectue en introduisant des outils adaptés dans le second compartiment du réservoir, en traversant la paroi en matériau composite par au moins un premier trou d'homme.

On pourra alors prévoir que le recollage de l'ensemble formé par la paroi métallique partiellement revêtue de la protection thermique s'effectue en introduisant un fluide dans le premier compartiment, afin de mettre la paroi métallique sous pression pendant l'application de cette paroi métallique contre la paroi extérieure en matériau composite.

De façon préférée, le montage du mandrin s'effectue sur un axe de support, sur lequel est également insérée la paroi métallique repliée, lors de la mise en place de cette paroi métallique sur le mandrin.

Par ailleurs, avant la mise en place de la paroi métallique sur le mandrin, la paroi métallique peut être repliée de telle sorte qu'elle est divisée en deux parties sensiblement identiques et en contact surfacique, l'une des deux parties épousant le mandrin après l'étape de mise en place de la paroi métallique sur le mandrin, et étant symétrique de l'autre des deux parties après l'étape de déploiement de la paroi métallique.

Avantageusement, l'étape de déploiement de la paroi métallique est réalisée par gonflage en injectant un fluide à l'intérieur de la paroi métallique. De manière préférée, l'injection de fluide s'effectue par l'intermédiaire de moyens d'injection traversant la paroi extérieure en matériau composite et la paroi métallique par au moins un second trou d'homme, pratiqué sur des portions plaquées de la paroi extérieure en matériau composite et de la paroi métallique. Notons qu'il est également possible de prévoir que l'injection de fluide est assistée par au moins un piston assurant le déploiement de la paroi métallique de façon symétrique, chaque piston étant introduit dans le second compartiment du réservoir par l'intermédiaire d'au moins un premier trou d'homme traversant la paroi extérieure en matériau composite.

En outre, l'invention a également pour objet un réservoir pour fluides sous pression comprenant deux compartiments, dont un premier d'entre eux est situé à l'intérieur d'une paroi métallique. Selon l'invention, le réservoir comporte une paroi extérieure en matériau composite à l'intérieur de laquelle se trouve la paroi métallique partiellement en contact avec cette paroi extérieure du réservoir, un second compartiment du réservoir étant situé entre la paroi extérieure en matériau composite du réservoir et la paroi métallique.

Avantageusement, avec un tel agencement, le réservoir proposé selon l'invention permet de contenir des ergols stockables et/ou cryogéniques, sous une pression pouvant facilement atteindre plusieurs bars.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique en coupe de face d'un réservoir selon un mode de réalisation préféré de la présente invention ;
- les figures 2a à 2e représentent des vues schématiques explicitant les différentes étapes d'un procédé de fabrication du réservoir représenté sur la figure 1, selon un mode de réalisation préféré de la présente invention ;
- les figures 3a à 3e représentent des vues schématiques explicitant les différentes étapes d'un procédé de fabrication du réservoir représenté sur la figure 1, selon un autre mode de réalisation préféré de la présente invention.

### EXPOSÉ DÉTAILLÉ DE MODES DE RÉALISATION PRÉFÉRÉS

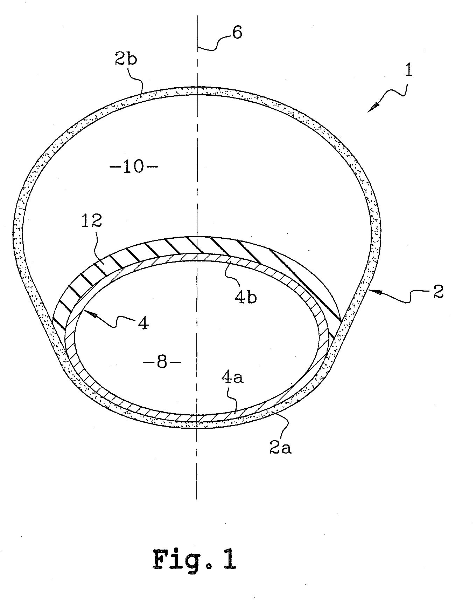

La figure 1 illustre un réservoir 1 pour fluides sous pression, selon un mode de réalisation préféré de la présente invention.

De préférence, les fluides sous pression utilisés sont des ergols stockables et/ou cryogéniques, destinés à alimenter une chambre de combustion d'un étage de lanceur (non représenté). Le réservoir 1 est conçu pour supporter des pressions de l'ordre de 20 bars ou plus, cette valeur correspondant sensiblement à une pression requise pour des ergols stockables alimentant une chambre de combustion, sans transiter par des turbopompes.

Le réservoir 1 comporte une paroi extérieure 2 en matériau composite, de forme sensiblement sphérique ou elliptique et réalisée de préférence à l'aide de fils imprégnés bobinés de façon classique autour d'un mandrin de bobinage. Bien entendu, cette paroi extérieure 2 en matériau composite pourrait également être réalisée par bobinage par contact, ou encore par drapage, sans sortir du cadre de l'invention.

Une paroi métallique 4, de plus petites dimensions que la paroi extérieure 2 en matériau composite, est située à l'intérieur de cette dernière. La paroi métallique 4, de préférence réalisée en aluminium, est de forme sensiblement sphérique aplatie ou elliptique, et coaxiale d'axe 6 avec la paroi extérieure 2 du réservoir 1.

Comme on peut le voir sur la figure 1, la paroi métallique 4 est partiellement en contact avec la paroi extérieure 2 en matériau composite. Pour établir ce contact, la paroi extérieure 2 et la paroi métallique 4 disposent respectivement de portions 2a et 4a de formes sensiblement complémentaires, ces portions 2a et 4a étant en contact surfacique et collées l'une sur l'autre.

Notons que de manière préférentielle, la portion de contact 4a de la paroi métallique 4 correspond à une moitié de cette paroi, présentant une forme de demi-sphère légèrement aplatie. Par ailleurs, pour que la portion 2a de la paroi extérieure 2 en matériau composite épouse totalement la portion 4a de la paroi métallique 4, la portion 2a dispose d'un rayon de courbure légèrement inférieur à un rayon de courbure moyen de la paroi extérieure 2 de forme sensiblement sphérique ou elliptique.

Le réservoir 1 comprend deux compartiments 8, 10 destinés à contenir des fluides sous pression, un premier compartiment 8 étant situé à l'intérieur de la paroi métallique 4. Le premier compartiment 8 est donc un espace de forme sensiblement sphérique aplatie.

Le second compartiment 10 du réservoir 1 est situé entre la paroi extérieure 2 et la paroi métallique 4. En d'autres termes, le second compartiment 10 est délimité d'une part par une portion 2b de la paroi extérieure 2 n'étant pas en contact avec la paroi métallique 4, et d'autre part par une portion 4b de la paroi métallique 4 n'étant pas en contact avec la paroi extérieure 2 du réservoir 1.

Notons que dans cette configuration, la portion 4b de la paroi métallique 4, sensiblement identique et symétrique à la portion 4a de cette même paroi, constitue une cloison entre les deux compartiments 8 et 10 du réservoir 1.

Le second compartiment 10 dispose par conséquent d'une forme sensiblement sphérique ou elliptique, partiellement tronquée par une autre sphère légèrement aplatie coaxiale de diamètre inférieur.

Dans le mode de réalisation préféré décrit, la portion 4b de la paroi métallique 4 séparant les premier et second compartiments 8 et 10 est munie extérieurement, c'est-à-dire du côté du compartiment 10, d'une protection thermique 12. La protection thermique 12 est collée sur toute la surface de la portion 4b de la paroi métallique 4, et réalisée de préférence en nids-d'abeilles. Notons que la protection thermique 12 est essentiellement prévue pour faire face à la différence de température pouvant exister entre les deux fluides sous pression présents à l'intérieur des deux compartiments 8 et 10 du réservoir 1, notamment dans le cas où les deux ergols employés sont l'hydrogène liquide et l'oxygène liquide.

L'invention concerne également un procédé de fabrication d'un réservoir pour fluides sous pression comprenant deux compartiments, tel que celui décrit ci-dessus et représenté sur la figure 1.

Dans les modes de réalisation préférés qui vont être décrits ci-dessous, il est précisé que la paroi extérieure 2 en matériau composite est réalisée par bobinage classique. Naturellement, cette paroi 2 pourrait également être réalisée pour toute autre méthode connue utilisant un mandrin comme support pour la réalisation de cette paroi, telle que le bobinage par contact ou le drapage, sans sortir du cadre de l'invention.

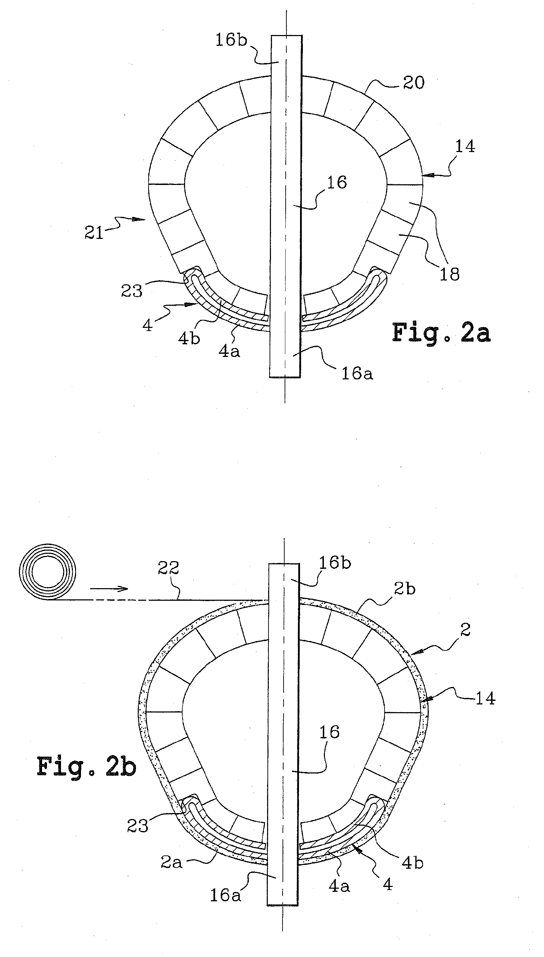

Un mode de réalisation préféré du procédé de fabrication du réservoir 1 va à présent être décrit, en référence aux figures 2a à 2e.

En référence à la figure 2a, la première étape du procédé consiste en un montage d'un mandrin de bobinage 14 sur un axe de support 16 orienté verticalement. Le mandrin de bobinage 14 est constitué d'une pluralité d'éléments rigides 18, qui lorsqu'ils sont assemblés les uns aux autres, permettent au mandrin 14 de disposer d'une surface extérieure 20 de forme sensiblement complémentaire de la forme de la paroi extérieure 2 à réaliser.

Ensuite, toujours en référence à la figure 2a, on met en place la paroi métallique 4 se présentant sous forme repliée sur la mandrin de bobinage 14. La mise en place de la paroi métallique 4 est effectuée en l'insérant dans l'axe de support 16, au niveau d'une extrémité inférieure 16a de cet axe 16, jusqu'à ce que la paroi métallique 4 épouse une partie de la surface extérieure 20 du mandrin de bobinage 14.

Il est à noter qu'avant la mise en place de la paroi métallique 4 sur le mandrin de bobinage 14, cette paroi métallique 4 est repliée de telle sorte que ses deux portions constitutives sensiblement identiques 4a et 4b soient en contact surfacique sur l'intégralité de leurs surfaces respectives. La mise en place est alors effectuée de manière à ce que la portion 4b en forme de demi-sphère aplatie, destinée ultérieurement à séparer les premier et second compartiments 8 et 10 du réservoir 1, épouse le mandrin de bobinage 14. Ainsi, lorsque la mise en place de la paroi métallique 4 est achevée, on obtient un ensemble 21 comprenant le mandrin de bobinage 14 et la paroi métallique 4 repliée. L'ensemble 21 est alors de forme complémentaire de celle de la paroi extérieure 2 à réaliser. Notons comme cela est visible sur la figure 2a, que certains éléments rigides 18 constituant le mandrin de bobinage 14 et destinés à être épousés par la portion 4b de la paroi métallique 4 peuvent être conçus afin de former un évidemment 23. Cet évidemment 23 permet ainsi au mandrin de bobinage 14 de recevoir la paroi métallique 4, de telle sorte que l'ensemble 21 dispose d'une surface extérieure continue constituée par la surface extérieure 21 du mandrin 14 et de la portion 4a de la paroi 4, cette surface composée ne comportant alors pas de ruptures dues à la surépaisseur engendrée par la présence de la paroi métallique 4.

Ensuite, il peut être envisageable d'effectuer une opération consistant en la mise en place d'un élément mono-couche ou multi-couches tout autour du mandrin de bobinage 14 et de la portion 4a de la paroi métallique 4, afin d'assurer l'étanchéité du réservoir 1. A titre d'exemple, cet élément (non représenté) peut être plastique ou métallique.

L'étape suivante, illustrée par la figure 2b, concerne la réalisation de la paroi extérieure 2 du réservoir 1 en matériau composite, effectuée de manière classique par bobinage de fils imprégnés 22 autour de l'ensemble 21. Notons que l'ensemble 21 peut également comprendre l'élément assurant l'étanchéité du réservoir 1, lorsque celui-ci a été assemblé durant l'opération facultative précédente.

Une fois le bobinage de fils 22 terminé, on procède à une opération de polymérisation de la paroi extérieure 2 en matériau composite, afin d'engendrer le durcissement de celle-ci. L'opération de polymérisation peut alors consister en un simple chauffage, provoquant également le collage de la portion 4a de la paroi métallique 4, sur la portion 2a de la paroi extérieure 2 du réservoir 1.

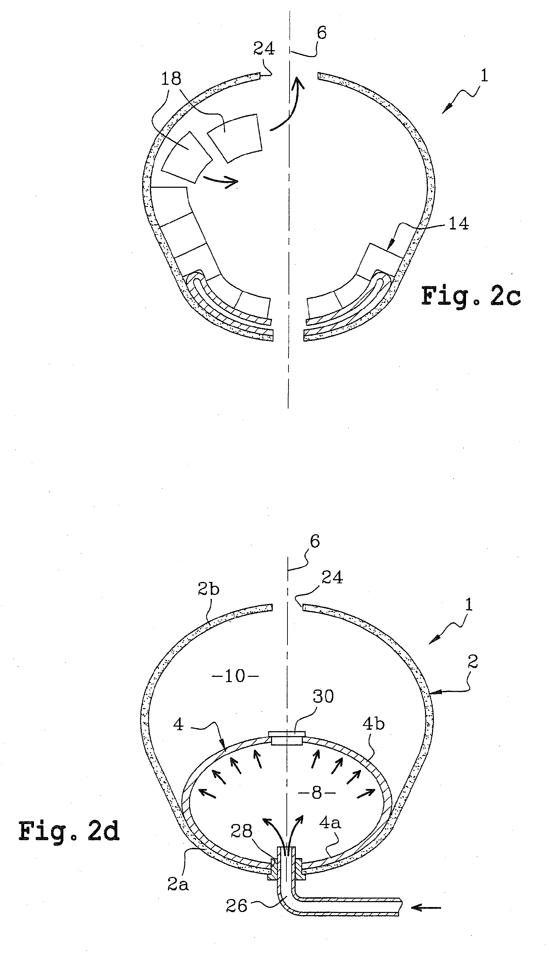

En référence à la figure 2c, on réalise ensuite le démontage du mandrin de bobinage 14, en procédant notamment à l'extraction des éléments constitutifs 18 de ce mandrin 14, en dehors de l'espace fermé délimité par la paroi extérieure 2 du réservoir 1. Pour ce faire, chaque élément constitutif 18 du mandrin de bobinage 14 est tout d'abord désassemblé du reste du mandrin 14, puis extrait de l'espace fermé par l'intermédiaire d'un premier trou d'homme 24.

Dans le mode de réalisation préféré décrit, un seul premier trou d'homme 24 est prévu dans la paroi extérieure 2 du réservoir 1, au niveau où se situait une extrémité supérieure 16b de l'axe de support 16 du mandrin de bobinage 14, lors de l'opération de bobinage de fils imprégnés 22 visant à réaliser cette paroi extérieure 2. Bien entendu, il est également possible de prévoir un nombre supérieur de premiers trous d'homme 24, sans sortir du cadre de l'invention.

Ensuite, on effectue le déploiement de la paroi métallique 4 à l'intérieur de la paroi extérieure 2 du réservoir 1. Plus précisément, c'est la portion 4b de la paroi métallique 4 qui est déployée, de manière à ce que le premier compartiment 8 soit défini à l'intérieur de la paroi métallique 4 initialement repliée, et à ce que le second compartiment 10 du réservoir 1 soit défini entre la portion 2b de la paroi extérieure 2, et la portion 4b formant cloison de la paroi métallique 4.

Préférentiellement, l'étape de déploiement de la paroi métallique 4 s'effectue par gonflage, en injectant un fluide à l'intérieur de la paroi métallique 4.

En référence à la figure 2d, pour injecter le fluide tel que du gaz sous pression, des moyens d'injection comprenant une canalisation de sortie 26 sont couplés au réservoir 1.

La canalisation de sortie 26 est installée sur le réservoir 1, de manière à traverser les portions plaquées et en contact 2a et 4a de la paroi extérieure 2 et de la paroi métallique 4, par un second trou d'homme 28.

Dans le mode de réalisation préféré décrit, un seul second trou d'homme 28 est prévu dans la paroi extérieure 2 et la paroi métallique 4 du réservoir 1, au niveau où se situait l'extrémité inférieure 16a de l'axe de support 16 du mandrin de bobinage 14, lors de l'opération de bobinage de fils imprégnés 22 visant à réaliser la paroi extérieure 2. Bien entendu, il est également possible de prévoir un nombre supérieur de seconds trous d'homme 28, sans sortir du cadre de l'invention

De plus, il est à préciser que l'étape d'insertion de la paroi métallique 4 sur l'axe de support 16 nécessite la formation d'un orifice sur chacune des portions 4a et 4b de la paroi métallique 4. Ainsi, tandis que l'orifice prévu sur la portion 4a est utilisé pour réaliser le second trou d'homme 28, l'orifice présent sur la portion 4b peut être obturé à l'aide d'un bouchon 30, avant le déploiement par gonflage de la paroi métallique 4 du réservoir 1.

D'autre part, on peut également prévoir que l'injection de gaz sous pression depuis la canalisation 26 soit assistée par au moins un piston (non représenté), assurant le déploiement symétrique de la paroi métallique 4. A titre d'exemple, le ou les pistons utilisés peuvent alors être introduits dans le second compartiment 10 du réservoir 1, par le premier trou d'homme 24 prévu sur la paroi extérieure 2 du réservoir 1.

Dans le mode de réalisation présenté, suite au déploiement de la paroi métallique 4, on réalise également la mise en place d'une protection thermique 12 sur la portion 4b de la paroi métallique 4, séparant le premier compartiment 8 et le second compartiment 10 du réservoir 1.

La protection thermique 12 est alors insérée dans le second compartiment 10 par le premier trou d'homme 24, puis collée sur la portion 4b formant cloison de la paroi métallique 4.

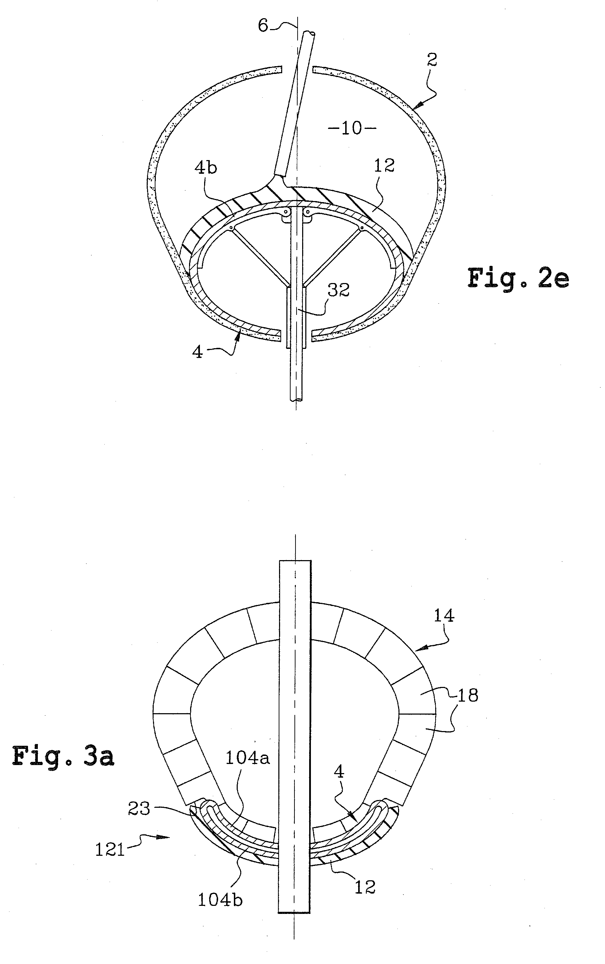

Comme l'illustre la figure 2e, notons que pour faciliter l'opération de collage de la protection thermique 12 sur la portion 4b de la paroi métallique 4, on peut éventuellement prévoir la présence des moyens d'appui du type parapluie 32 à l'intérieur du premier compartiment 8. Pour ce faire, le parapluie 32 est tout d'abord introduit dans le premier compartiment 8 par le second trou d'homme 28, puis déployé à l'intérieur de ce compartiment de manière à épouser totalement la portion 4b de la paroi métallique 4. Ainsi, la portion 4b est mise sous pression et ne se déforme pas sous la contrainte exercée par la protection thermique 12, lors de l'opération de collage de cette dernière.

Selon un autre mode de réalisation préféré du procédé de fabrication selon l'invention, l'étape de mise en place de la paroi métallique 4 sur le mandrin de bobinage 14, représentée sur la figure 2a, est suivie d'une opération de collage de la protection thermique 12 sur une portion 104b de la paroi métallique 4 n'étant pas en contact avec le mandrin de bobinage 14 (figure 3a). Notons que dans ce mode de réalisation préféré, contrairement au mode de réalisation préféré précédemment décrit, la portion 104b de la paroi métallique 4 destinée à séparer les premier et second compartiments 8 et 10 n'est pas la portion de la paroi métallique 4 initialement en contact avec le mandrin de bobinage 14. En effet, c'est une portion 104a épousant la portion 104b qui est prévue pour être en contact avec le mandrin de bobinage 14 suite à la mise en place de la paroi métallique 4, cette portion 104a étant ultérieurement destinée à être en contact avec la portion 2a de la paroi extérieure 2. Cependant, il est précisé que les portions 104b et 104a de la paroi métallique 4 sont respectivement similaires aux portions 4a et 4b de la paroi métallique 4 décrite dans le mode de réalisation préféré présenté ci-dessus.

La protection thermique 12 est alors disposée pour épouser sensiblement toute la surface de la portion 104b de la paroi métallique 4. Par suite, une couche de démoulant (non représentée) est appliquée sur la face de la protection thermique 12 n'étant pas en contact avec la portion 104b de la paroi métallique 4, afin de créer un ensemble 121 formé par le mandrin de bobinage 14, la paroi métallique 4, la protection thermique 12, ainsi que la couche de démoulant appliquée. L'ensemble 121 est alors de forme complémentaire de celle de la paroi extérieure 2 à réaliser. Notons que comme dans le mode de réalisation précédent, il est possible de prévoir un évidemment 23 dans le mandrin de bobinage 14, dans lequel sont aptes à reposer la paroi métallique 4 et la protection thermique 12, afin que l'ensemble 121 dispose d'une surface extérieure composée sans ruptures.

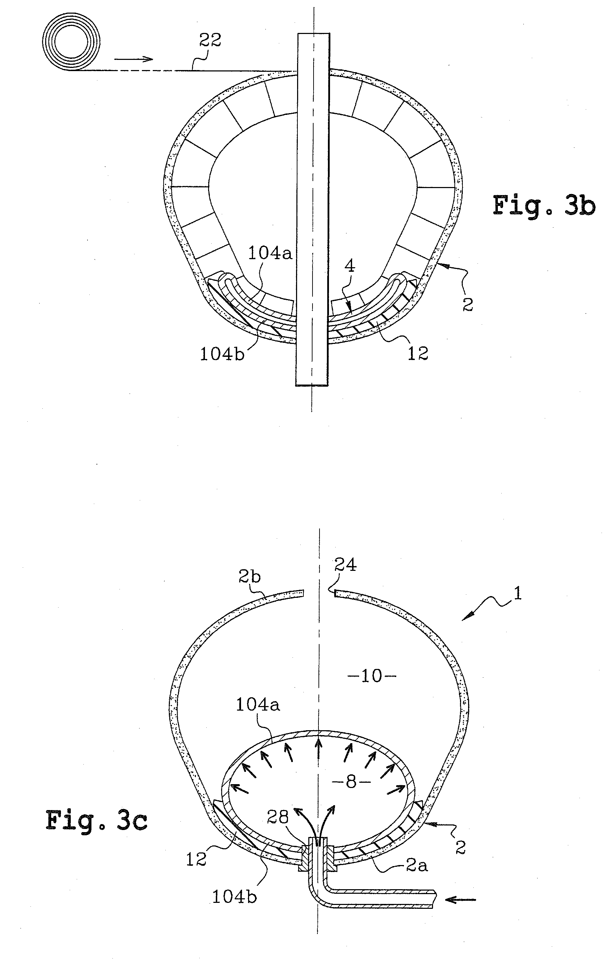

Lorsque les opérations qui viennent d'être décrites sont achevées, on procède à la réalisation de la paroi extérieure 2 du réservoir 1, par bobinage de fils imprégnés 22 autour de l'ensemble 121, comme représenté sur la figure 3b. La portion 104b de la paroi métallique 4 est alors plaquée contre la portion 2a de la paroi extérieure 2, mais séparée d'elle au moyen de la protection thermique 12 revêtue d'une couche de démoulant.

Les étapes de polymérisation de la paroi extérieure 2 du réservoir 1, de démontage du mandrin de bobinage 14 et de déploiement de la paroi métallique 4 sont réalisées de la même manière que dans le mode de réalisation précédemment décrit. Le réservoir 1 obtenu, représenté sur la figure 3c, comprend un premier trou d'homme 24 sur la portion 2b de la paroi extérieure 2, le trou d'homme 24 étant disposé sensiblement au même emplacement que dans le mode de réalisation préféré décrit précédemment. De la même façon, le réservoir 1 comprend un second trou d'homme 28 traversant la portion 2a de la paroi extérieure 2, ainsi que la portion 104b de la paroi métallique 4. Le second trou d'homme 28, disposé également au même emplacement que dans le mode de réalisation préféré décrit précédemment, est en outre pratiqué dans la protection thermique 12 prévue entre les deux portions 2a et 104b citées ci-dessus. Cela permet à des moyens d'injection de fluide (non représentés), utilisés pour réaliser le déploiement de la paroi métallique 4, de pouvoir disposer d'un accès à l'intérieur de cette paroi métallique 4.

Comme mentionné ci-dessus, après le démontage du mandrin de bobinage 14, on dispose d'un réservoir 1 comprenant le premier compartiment 8 et le second compartiment 10, délimités par la paroi extérieure 2 et la paroi métallique 4 plaquées l'une contre l'autre, et séparées par la protection thermique 12.

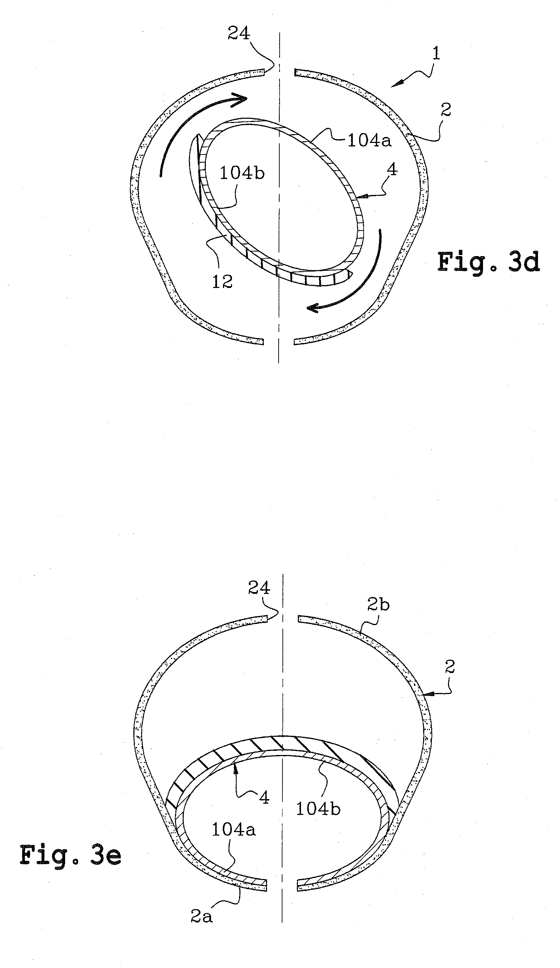

Pour amener la protection thermique 12 entre le premier compartiment 8 et le second compartiment 10, la paroi métallique 4 revêtue partiellement de la protection thermique 12 est tout d'abord décrochée de la portion 2a de la paroi extérieure 2 à laquelle la protection thermique 12 adhère. Ensuite, comme l'illustrent les figures 3d et 3e, la paroi métallique 4 revêtue partiellement de la protection thermique 12 est retournée puis recollée sur la paroi extérieure 2. Ces diverses opérations sont effectuées de manière à ce que la portion 104b portant la protection thermique 12, initialement plaquée contre la paroi extérieure 2, forme une cloison entre le premier compartiment 8 et le second compartiment 10. En d'autres termes, la portion 104b prend la place de la portion 104a, et réciproquement. Ainsi, lorsque ces différentes opérations sont achevées, la portion 104a de la paroi métallique 4 est collée sur la portion 2a de la paroi extérieure 2 du réservoir 1.

Notons à titre d'exemple que les étapes de retournement et de recollage peuvent être effectuées en introduisant des outils adaptés (non représentés) à l'intérieur de la paroi extérieure 2, par l'intermédiaire du premier trou d'homme 24.

Par ailleurs, il est précisé que le recollage de la portion 104a de la paroi métallique 4 sur la portion 2a de la paroi extérieure 2 est réalisé en introduisant un fluide dans le premier compartiment 8 du réservoir 1, afin de mettre la paroi métallique 4 sous pression pendant cette opération de recollage.

Enfin, selon une autre alternative de ce mode de réalisation préféré, notons que la paroi métallique 4 revêtue partiellement de la protection thermique 12 peut subir l'opération de retournement avant celle du déploiement de la paroi métallique 4.

Bien entendu, diverses modifications peuvent être apportées par l'homme du métier au réservoir 1 et aux procédés de fabrication d'un tel réservoir qui viennent d'être décrits, uniquement à titre d'exemples non limitatifs.

## Revendications

1. Procédé de fabrication d'un réservoir (1) pour fluides sous pression comprenant deux compartiments (8,10), **caractérisé en ce qu'**il comprend les étapes suivantes :
- montage d'un mandrin (14) de forme sensiblement complémentaire de celle d'une paroi extérieure (2) du réservoir (1) ;
- mise en place d'une paroi métallique (4) sur le mandrin (14), la paroi métallique (4) se présentant sous forme repliée et étant mise en place de façon à épouser une partie dudit mandrin (14) ;
- réalisation de la paroi extérieure (2) du réservoir (1) en matériau composite, autour d'un ensemble (21,121) comprenant le mandrin (14) et la paroi métallique repliée (4) ;
- polymérisation de la paroi extérieure (2) en matériau composite du réservoir (1) ;
- démontage du mandrin (14) ;
- déploiement de la paroi métallique (4) à l'intérieur de la paroi extérieure (2) du réservoir (1), de façon à obtenir un premier compartiment (8) à l'intérieur de la paroi métallique (4), ainsi qu'un second compartiment (10) entre la paroi extérieure (2) du réservoir (1) en matériau composite et la paroi métallique (4).

2. Procédé de fabrication d'un réservoir (1) selon la revendication 1, **caractérisé en ce que** l'opération de polymérisation de la paroi extérieure (2) en matériau composite provoque le collage de la paroi métallique (4) sur la paroi extérieure (2) en matériau composite.

3. Procédé de fabrication d'un réservoir (1) selon la revendication 1 ou la revendication 2, **caractérisé en ce qu'**après l'étape de déploiement de la paroi métallique (4), on met en place une protection thermique (12) sur une portion (4b) de la paroi métallique (4) séparant le premier (8) et le second compartiments (10) du réservoir (1).

4. Procédé de fabrication d'un réservoir (1) selon la revendication 3, **caractérisé en ce que** la mise en place de la protection thermique (12) s'effectue en introduisant ladite protection à l'intérieur du second compartiment (10), par au moins un premier trou d'homme (24) traversant ladite paroi extérieure (2) en matériau composite.

5. Procédé de fabrication d'un réservoir (1) selon la revendication 4, **caractérisé en ce que** la mise en place de la protection thermique (12) s'effectue par collage de celle-ci sur la portion (4b) de la paroi métallique (4) séparant le premier (8) et le second compartiments (10) du réservoir (1), en présence de moyens d'appui (32) situés à l'intérieur du premier compartiment (8) du réservoir (1).

6. Procédé de fabrication d'un réservoir (1) selon la revendication 5, **caractérisé en ce que** l'on introduit les moyens d'appui (32) à l'intérieur du premier compartiment (8) en traversant la paroi extérieure (2) en matériau composite et la paroi métallique (4) par au moins un second trou d'homme (28), pratiqué sur des portions (2a,4a) en contact de la paroi extérieure (2) en matériau composite et de la paroi métallique (4).

7. Procédé de fabrication d'un réservoir (1) selon la revendication 1, **caractérisé en ce qu'**après l'étape de mise en place de la paroi métallique (4) sur le mandrin (14) et avant la réalisation de la paroi extérieure (4) du réservoir (1) en matériau composite, on colle une protection thermique (12) sur une portion (104b) de la paroi métallique (4) n'étant pas en contact avec le mandrin (14), puis on procède à l'application d'une couche de démoulant sur ladite protection thermique (12).

8. Procédé de fabrication d'un réservoir (1) selon la revendication 7, **caractérisé en ce qu'**après l'étape de déploiement de la paroi métallique (4), l'ensemble formé par ladite paroi métallique déployée (4) revêtue partiellement de la protection thermique (12) est décroché de la paroi extérieure (2) en matériau composite, puis retourné et recollé sur cette paroi extérieure (2) du réservoir (1) en matériau composite, de façon à ce que la protection thermique (12) se situe sur une portion (104b) de la paroi métallique (4) séparant le premier (8) et le second compartiments (10) du réservoir (1).

9. Procédé de fabrication d'un réservoir (1) selon la revendication 8, **caractérisé en ce que** l'opération de retournement et de recollage de l'ensemble formé par ladite paroi métallique déployée (4) revêtue partiellement de la protection thermique (12) s'effectue en introduisant des outils adaptés dans le second compartiment (10) du réservoir (1), en traversant la paroi en matériau composite (2) par au moins un premier trou d'homme (24).

10. Procédé de fabrication d'un réservoir (1) selon la revendication 9, **caractérisé en ce que** le recollage de l'ensemble formé par ladite paroi métallique (4) partiellement revêtue de la protection thermique (12) s'effectue en introduisant un fluide dans le premier compartiment (8), afin de mettre la paroi métallique (4) sous pression pendant l'application de cette paroi métallique (4) contre la paroi extérieure (2) en matériau composite.

11. Procédé de fabrication d'un réservoir (1) selon l'une quelconque des revendications précédentes, **caractérisé en ce que** le montage du mandrin (14) s'effectue sur un axe de support (16), sur lequel est également insérée la paroi métallique (4) repliée, lors de la mise en place de cette paroi métallique (4) sur le mandrin (14).

12. Procédé de fabrication d'un réservoir (1) selon l'une quelconque des revendications précédentes, **caractérisé en ce qu'**avant la mise en place de la paroi métallique (4) sur le mandrin (14), la paroi métallique (4) est repliée de telle sorte qu'elle est divisée en deux parties (4a,4b,104a,104b) sensiblement identiques et en contact surfacique, l'une desdites deux parties épousant le mandrin (14) après l'étape de mise en place de la paroi métallique (4) sur ledit mandrin (14), et étant symétrique de l'autre desdites deux parties après l'étape de déploiement de la paroi métallique (4).

13. Procédé de fabrication d'un réservoir (1) selon l'une quelconque des revendications précédentes, **caractérisé en ce que** l'étape de démontage du mandrin (14) inclut une étape d'extraction des éléments constitutifs (18) de ce mandrin (14) en dehors du second compartiment (10) du réservoir (1), par l'intermédiaire d'au moins un premier trou d'homme (24) traversant ladite paroi extérieure (2) en matériau composite.

14. Procédé de fabrication d'un réservoir (1) selon l'une quelconque des revendications précédentes, **caractérisé en ce que** l'étape de déploiement de la paroi métallique (4) est réalisée par gonflage en injectant un fluide à l'intérieur de ladite paroi métallique (4).

15. Procédé de fabrication d'un réservoir (1) selon la revendication 14, **caractérisé en ce que** l'injection de fluide s'effectue par l'intermédiaire de moyens d'injection (26) traversant la paroi extérieure (2) en matériau composite et la paroi métallique (4) par au moins un second trou d'homme (28), pratiqué sur des portions plaquées (2a,4a,104a,104b) de la paroi extérieure (2) en matériau composite et de la paroi métallique (4).

16. Procédé de fabrication d'un réservoir (1) selon la revendication 14 ou la revendication 15, **caractérisé en ce que** l'injection de fluide est assistée par au moins un piston assurant le déploiement de la paroi métallique (4) de façon symétrique, chaque piston étant introduit dans le second compartiment (10) du réservoir (1) par l'intermédiaire d'au moins un premier trou d'homme (24) traversant ladite paroi extérieure (2) en matériau composite.

17. Réservoir (1) pour fluides sous pression comprenant deux compartiments (8,10) dont un premier (8) d'entre eux est situé à l'intérieur d'une paroi métallique (4), **caractérisé en ce que** le réservoir (1) comporte une paroi extérieure (2) en matériau composite à l'intérieur de laquelle se trouve ladite paroi métallique (4) partiellement en contact avec cette paroi extérieure (2) du réservoir (1), un second compartiment (10) dudit réservoir (1) étant situé entre la paroi extérieure (2) en matériau composite du réservoir (1) et ladite paroi métallique (4).

18. Réservoir (1) selon la revendication 17, **caractérisé en ce que** la paroi métallique (4) est constituée de deux parties symétriques (4a,4b), l'une des deux portions (4a,4b) étant en contact avec la paroi extérieure (2) en matériau composite du réservoir (1), et l'autre des deux portions (4a,4b) séparant le premier (8) et le second compartiments (10) du réservoir (1).

19. Réservoir (1) selon la revendication 18, **caractérisé en ce que** la portion (4b) de la paroi métallique (4) séparant le premier (8) et le second compartiments (10) du réservoir (1) est revêtue d'une protection thermique (12).

20. Réservoir (1) selon l'une quelconque des revendications 17 à 19, **caractérisé en ce que** la paroi extérieure en matériau composite (2) et la paroi métallique (2) sont sensiblement sphériques et coaxiales.

21. Réservoir (1) selon l'une quelconque des revendications 17 à 20, **caractérisé en ce que** les deux compartiments (8,10) sont aptes à contenir des ergols stockables et/ou cryogéniques.
